(19) Europäisches Patentamt
European Patent Office
Office européen des brevets

(11) EP 4 026 272 B1

(12) # FASCICULE DE BREVET EUROPEEN

(45) Date de publication et mention de la délivrance du brevet:
**11.12.2024 Bulletin 2024/50**

(21) Numéro de dépôt: **20767768.3**

(22) Date de dépôt: **03.09.2020**

(51) Classification Internationale des Brevets (IPC):
***H04L 9/08*** *(2006.01)*

(52) Classification Coopérative des Brevets (CPC):
**H04L 9/0855; H04L 9/0858**

(86) Numéro de dépôt international:
**PCT/EP2020/074576**

(87) Numéro de publication internationale:
**WO 2021/043891 (11.03.2021 Gazette 2021/10)**

(54) **PROCEDE DE TRANSMISSION SECURISEE DE SEQUENCES D'ETATS QUANTIQUES ENTRE PLUSIEURS PARTICIPANTS EN LIGNE SUR UN CANAL DE COMMUNICATION QUANTIQUE**

VERFAHREN ZUM SICHEREN ÜBERTRAGEN VON QUANTENZUSTÄNDEN ZWISCHEN EINER MEHRZAHL VON ONLINE-TEILNEHMERN ÜBER EINEN QUANTEN-KOMMUNIKATIONSKANAL

METHOD FOR SECURELY TRANSMITTING SEQUENCES OF QUANTUM STATES BETWEEN A PLURALITY OF ONLINE PARTICIPANTS OVER A QUANTUM COMMUNICATION CHANNEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.09.2019 FR 1909839**

(43) Date de publication de la demande:
**13.07.2022 Bulletin 2022/28**

(73) Titulaire: **VeriQloud**
**92120 Montrouge (FR)**

(72) Inventeurs:
- **KAPLAN, Marc**
  **92120 MONTROUGE (FR)**
- **HARDER, George**
  **75013 Paris (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
**US-A- 5 764 765 US-A1- 2007 076 883**

- **ZHOU PING ET AL: "Efficient Three-Party Quantum Secret Sharing with Single Photons", CHINESE PHYSICS LETTERS, INSTITUTE OF PHYSICS PUBLISHING, BRISTOL, GB, vol. 24, no. 8, 1 August 2007 (2007-08-01), pages 2181 - 2184, XP020114082, ISSN: 0256-307X, DOI: 10.1088/0256-307X/24/8/008**
- **A. R. DIXON ET AL: "Quantum key distribution with hacking countermeasures and long term field trial", SCIENTIFIC REPORTS, vol. 7, no. 1, 16 May 2017 (2017-05-16), XP055707051, DOI: 10.1038/s41598-017-01884-0**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 4 026 272 B1

## Description

La présente invention concerne de manière générale le domaine de la communication quantique et plus particulièrement une méthode et un dispositif pour échanger des séquences d'états quantiques entre plusieurs participants d'un même canal de communication quantique.

La communication quantique consiste à échanger des états quantiques, encodés sur des bits quantiques ou qubits, entre plusieurs participants. Lorsque les états quantiques à échanger doivent l'être de manière secrète, la communication quantique est couplée à des méthodes de cryptographie quantique, ces dernières consistant à utiliser les propriétés de la physique quantique pour établir des protocoles de cryptographie, c'est-à-dire qui assurent la confidentialité des données échangées, permettant de sécuriser la communication quantique.

Un exemple de protocole de communication quantique bien connu est la distribution de clé quantique (QKD, « quantum key distribution »), qui permet à deux participants reliés par un canal de communication quantique non-sécurisé d'établir une clé aléatoire qui peut être utilisée pour chiffrer une communication classique standard. Dans un protocole de distribution de clé quantique, il y a deux participants jouant en général un rôle différent : un émetteur, qui envoie de l'information quantique sous la forme de qubits, et un récepteur, qui décode cette information grâce à un dispositif adéquat.

Il est connu de l'homme de l'art, dans les protocoles de distribution de clé quantique utilisés en pratique, d'encoder les qubits constituant la clé à distribuer dans des photons. La génération des photons est réalisée par un laser, l'encodage des photons est réalisé par un modulateur de propriétés optiques, et le décodage par le récepteur par un montage impliquant un détecteur de photons. A la fin du protocole, l'émetteur et le récepteur partagent une chaîne de qubits aléatoires secrète, voir par exemple US5764765.

L'article "Quantum key distribution with hacking countermeasures and long term field trial" by A. R. Dixon et al., in SCIENTIFIC REPORTS, vol. 7, no. 1, 16 mai 2017 (2017-05-16), DOI: 10.1038/ S41598-017-01884-0, présente une contre-mesure utilisant une partie de la puissance pour détecter une attaque, cela défend contre des attaques incluant des attaques de type blinding, aveuglement.

Un problème technique que se propose de résoudre l'invention est de proposer une méthode sécurisée pour l'échange d'un flux d'états quantiques entre deux participants parmi un nombre de participants d'un même canal de communication quantique supérieur ou égal à trois et formant une chaîne de communication quantique, les deux participants échangeant un flux d'états quantiques pouvant être différents des participants dits émetteur et récepteur dans un protocole de distribution de clé quantique de l'art antérieur, ainsi qu'un dispositif pour mettre en oeuvre cette méthode, ledit dispositif utilisant un matériel simple et très limité.

Afin de résoudre ce problème, le demandeur a mis au point un procédé de transmission sécurisée selon la revendication 1 et un dispositif selon la revendication 8. Des détails supplémentaires sont présentés dans les revendications dépendantes.

Les avantages et particularités de la présente invention résulteront de la description détaillée qui va suivre, donnée à titre d'exemple non limitatif et faite en référence aux figures annexées :

- La figure 1 illustre plusieurs exemples de degrés de liberté pour l'encodage de bits quantiques ainsi que des exemples de bases incompatibles associées.
- La figure 2 est un synoptique du procédé de transmission sécurisée d'un état quantique entre deux participants d'une chaîne de communication comprenant N participants en ligne selon un premier mode de réalisation.
- La figure 3 illustre un exemple d'effet de transformations pouvant être appliquées sur un état quantique de référence dans le cadre du procédé de transmission sécurisée de séquences d'états quantiques.
- La figure 4 illustre un exemple de réalisation d'attaque par canaux cachés dans un dispositif de communication quantique optique.
- La figure 5 illustre une étape supplémentaire réalisée dans un deuxième mode de réalisation du procédé de transmission sécurisée d'un état quantique.
- La figure 6 illustre une réalisation de dispositif pour la mise en oeuvre du procédé de transmission sécurisée d'une séquence, pour une chaîne de communication quantique de 4 participants.
- La figure 7 illustre un dispositif modulateur de localisation temporelle
- La figure 8 est un exemple de bases incompatibles dans un espace vectoriel hilbertien de dimension 4.

DESCRIPTION DETAILLEE

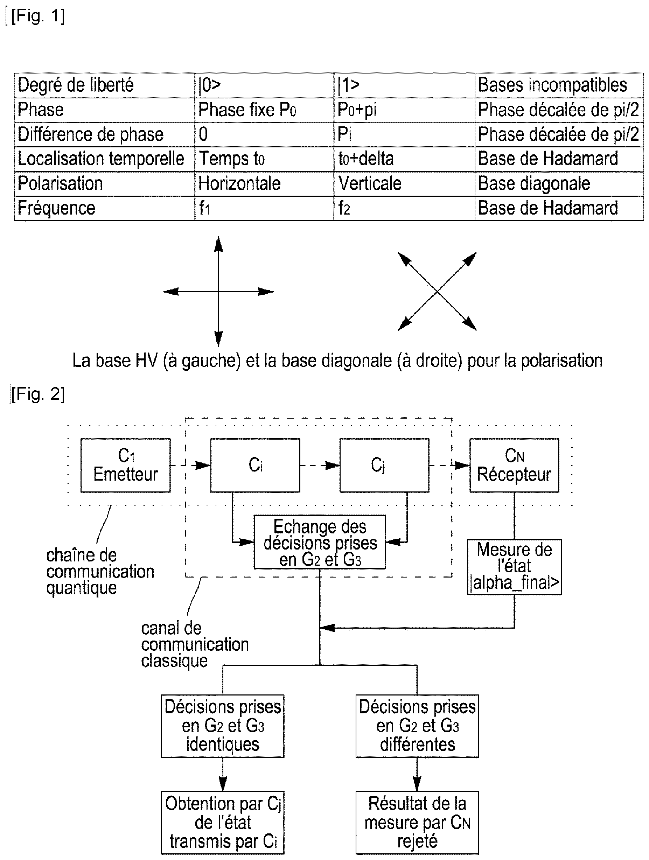

La présente invention présente un procédé de transmission sécurisée pour envoyer des séquences d'états quantiques, codés sur des bits quantiques, entre plusieurs participants en ligne sur un canal de communication quantique. Dans les modes de réalisation et exemples présentés ci-dessous, les bits quantiques sont codés avec des photons dans un degré de liberté de ceux-ci. Par degré de liberté de photon, on entend une propriété physique décrite par la mécanique quantique et utilisable pour des communications quantiques. Des exemples de degrés de liberté des photons sont la phase, la différence de phase, la fréquence, la polarisation ou encore la localisation temporelle. Dans cette description, on utilise le formalisme qui représente un état quantique sous la forme d'un vecteur $|\alpha>$ dans un espace vectoriel hilbertien de dimension d. Le concept d'espace vectoriel hilbertien étend les méthodes de l'algèbre linéaire en généralisant les notions d'espace euclidien (comme le plan euclidien ou l'espace usuel de dimension 3) et d'espace hermitien à des espaces de dimension quelconque (finie ou infinie). Un vecteur $|\alpha>$ d'un espace vectoriel hilbertien de dimension d peut être décrit par l'intermédiaire d'une base de l'espace vectoriel hilbertien de dimension d. Pour la suite de la description des modes de réalisation et exemples qui suivront, le concept de bases incompatibles va être utilisé. Deux bases d'un même espace vectoriel hilbertien sont dites incompatibles si chaque vecteur d'une des deux bases a des projections de longueurs égales sur chacun des vecteurs de l'autre base. La figure 1 donne des exemples de bases incompatibles pour différents degrés de liberté de photon, dans un espace vectoriel hilbertien de dimension 2.

On décrit ici un premier mode de réalisation de l'invention dans le cas particulier d'un espace vectoriel hilbertien de dimension d, d étant un entier supérieur ou égal à 2, et dans le cas d'une chaîne de communication comprenant N participants en ligne $C_1$, ... $C_i$,...$C_j$... et $C_N$, où $C_1$ est le participant émetteur et $C_N$ est le participant récepteur, et où N est un entier supérieur ou égal à 3. La figure 2 illustre ce premier mode de réalisation. Les participants intermédiaires $C_2$ à $C_{N-1}$ sont appelés transformateurs. Par le terme « émetteur », on désigne un participant muni d'un dispositif adéquat capable d'envoyer de l'information quantique, en particulier des bits quantiques encodant des états quantiques. Ici, puisqu'il est considéré que les bits quantiques sont codés dans des photons, le dispositif dont dispose l'émetteur est un laser générant des photons. Par le terme « récepteur », on désigne un participant muni d'un dispositif adéquat capable de décoder l'information quantique envoyée par un émetteur, notamment mesurer un état quantique lié à un bit quantique reçu. Dans le cas où les bits quantiques sont codés dans des photons, le dispositif dont dispose le récepteur peut être un détecteur de photon unique SPD. Par le terme « transformateur », dans le cas où les bits quantiques sont codés dans de photons, on désigne un participant muni d'un matériel lui permettant de moduler le signal optique qu'il reçoit. On considère qu'un transformateur dispose d'un matériel limité et qu'il ne peut que moduler le signal optique qu'il reçoit, mais ni créer de signal lui-même, ni mesurer l'état quantique d'un photon qu'il reçoit.

Dans le procédé de transmission sécurisée décrit dans cette demande, deux participants distincts $C_i$ et $C_j$ parmi les participants $C_1$ à $C_N$ de la chaîne de communication, Ci étant le participant le plus en amont dans la chaîne de communication, $C_j$ celui le plus en aval dans la chaîne de communication, décident de partager une séquence de Q états quantiques $q_q$, pour q un entier compris entre 1 et Q, ladite séquence présentant une puissance lumineuse $P_{seq}$ en nombre de photons par seconde. Selon la nature des participants $C_i$ et $C_j$, le procédé de transmission sécurisée peut présenter des étapes ordonnées de manière différente. Aussi, les participants $C_i$ et $C_j$ sont connus de tous, c'est-à-dire des autres participants de la chaîne de communication mais aussi du public.

En particulier, selon l'invention, la succession des étapes suivantes, le procédé peut se schématiser comme un processus itératif pour chaque de q=1 à Q, comportant à chaque itération :

- une première action effectuée par l'émetteur C1 comprenant
- la préparation par l'émetteur C1 d'un photon dans un état quantique de départ |u> d'une base d'encodage Ba orthonormée de dimension d et d'états de base $|e_0>$, $|e_1>$,... $|e_{d-1}>$, avec a choisi au hasard entre 0 et 1,
- transmission du photon préparé dans la chaîne de communication,
- une deuxième action effectuée par le premier participant Ci sur ledit photon, de décision de transformation ou non de l'état quantique du photon transmis, en un état quantique de base orthogonal dans la base d'encodage $B_0$ et dans la base d'encodage $B_1$
- une troisième action effectuée par le second participant $C_j$ sur ledit photon, de décision de transformation ou non de l'état quantique du photon reçu du participant immédiatement précédent $C_{j-1}$ en un état quantique orthogonal correspondant dans la base d'encodage $B_0$ et dans la base d'encodage $B_1$
- une quatrième action effectuée par le récepteur CN comprenant la mesure, dans la base standard $B_0$ ou dans la base $B_1$, de l'état final $|alpha_{final}>$ du photon transmis dans la chaîne de communication par le récepteur CN,
- échange sur un canal de communication classique entre au moins une partie des participants, d'au moins une partie des décisions parmi celles de la base de départ a, de l'état de départ |u>, de la base de mesure choisie par ledit récepteur CN et du résultat de la mesure de $|alpha_{final}>$ dans cette base de mesure,
- obtention, entre les premier et second participants Ci et Cj, d'une description de l'état quantique transmis qq correspondant à l'un des états de base $|e_0>$, $|e_1>$,... $|e_{d-1}>$, grâce à ladite partie des décisions et dudit résultat de la mesure ;

Puis, lorsque les Q itérations ont été effectuées, la reconstitution, par les premier et second participants Ci et Cj, par concaténation, d'une séquence des descriptions des Q états quantiques transmis $q_q$, pour q allant de 1 à Q.

Selon un premier mode de réalisation, l'émetteur C1 effectue une première action qui comprend les étapes suivantes :

- Choisir une valeur sq égale à 0 ou 1
- Choisir une valeur l comprise entre 0 et d-1
- Appliquer une transformation $P^{sq}X_l$ à un photon de référence créé par l'émetteur au début de la chaîne de communication

Le premier participant Ci effectue alors une seconde action qui comprend les étapes suivantes :

- Choisir une valeur m comprise entre 0 et d-1
- Appliquer une transformation $X_m$ au photon reçu à travers la chaîne de communication,

Le deuxième participant $C_j$ effectue une troisième action, qui comprend les étapes suivantes :

- Choisir une valeur n comprise entre 0 et d-1
- Appliquer une transformation $X_n$ au photon reçu à travers la chaîne de communication,

Le récepteur, enfin, effectue une quatrième action, qui comprend les étapes suivantes :

- Choisir une valeur tq égale à 0 ou 1
- Appliquer une transformation $P^{(-1)tq}$ au photon reçu à travers la chaîne de communication,

Puis, un échange est effectué sur un canal de communication classique entre au moins une partie des participants, d'au moins une partie des décisions parmi celles de la base de départ a, de l'état de départ |u>, de la base de mesure choisie par ledit récepteur (CN) et du résultat de la mesure de $|alpha_{fina}|$> dans cette base de mesure.
Cet échange permet à chacun des premier et second participants d'obtenir des informations de l'émetteur, du récepteur de l'autre participant.
Ces informations comprennent une description de l'état quantique transmis $q_q$ correspondant à l'un des états de base $|e_0>$, $|e_1>$,... $|e_{d-1}>$, grâce à ladite partie des décisions et au résultat de la mesure ;
Un des avantages de ce mode de réalisation est que les opérations de l'émetteur et du récepteur sont traditionnellement utilisées en l'absence d'autres participants sur la ligne de communication, c'est à dire sur les réseaux de communication quantique actuellement déployés, pour établir des clés de chiffrement partagées. Ainsi, des participants intermédiaires peuvent être ajoutés a *posteriori* sur des architectures de communication quantique déjà déployées sans modification des opérations de l'émetteur et du récepteur, étendant ainsi les capacités de ladite architecture.
Ci-dessous, un autre mode de réalisation va être décrit. Les explications liées à ce mode de réalisation et les variantes décrites sont fournies sans pertes de généralités et peuvent s'appliquer, *mutatis mutandis,* au premier mode de réalisation précédemment décrits.
Dans ce second mode de réalisation, on envisage ici un premier cas de procédé de transmission sécurisée d'une séquence d'états quantiques où les participants Ci et $C_j$ sont des participants différents des participants $C_1$ et $C_N$, c'est-à-dire qu'ils ne sont ni émetteur, ni récepteur, mais simplement des transformateurs. N est alors un entier supérieur ou égal à 4. La figure 2 donne une illustration générale de ce procédé de transmission sécurisée d'une séquence d'états quantiques. Les étapes du procédé de transmission sécurisée de la séquence d'états quantiques peuvent alors consister en la répétition des étapes suivantes, pour q étant un entier compris entre 1 et Q :

- dans une première action, le participant émetteur $C_1$ envoie à travers la chaîne de communication d'un photon préparé dans un état quantique de base de référence |0> d'une base d'encodage $B_0$ de travail nommée base standard, orthonormée, de dimension d, et d'états de base orthogonaux |0>, |1>,... |d-1> :
- le premier participant Ci effectue une deuxième action qui peut être vue comme composée de deux étapes $G_1$ et $G_2$ successives à réception du photon transmis dans la chaîne de communication, plus précisément :

  ■ dans une première étape $G_1$, le premier participant Ci décide ou non de transformer l'état quantique du photon reçu, ou généré, en un état quantique de base |m> orthogonal à l'état |0> dans la base d'encodage $B_0$,
  ■ dans une deuxième étape $G_2$, le premier participant Ci décide ou non d'appliquer une transformation P permettant d'effectuer un changement de base d'encodage, depuis la base standard $B_0$ vers en une base d'encodage $B_1$ orthonormée et de dimension d, incompatible avec la base standard $B_0$, d'états de base orthogonaux $|e_0>$, $|e_1>$,... $|e_{d-1}>$ ;

- le photon issu de la deuxième étape $G_2$ est propagé dans la chaîne de communication ;
- le second participant $C_j$ effectue une troisième action qui peut être vue comme composée de deux étapes $G_3$ et $G_4$ successives à réception du photon transmis dans la chaîne de communication, plus précisément :

■ dans une troisième étape $G_3$, le second participant $C_j$ décide ou non d'appliquer la transformation inverse de la transformation P, notée $P^{(-1)}$, permettant d'effectuer un changement de base d'encodage, depuis la base d'encodage $B_1$ vers la base standard $B_0$ ;

■ dans une quatrième étape $G_4$, le second participant $C_j$ décide ou non de transformer l'état quantique du photon reçu du participant $C_{j-1}$ en un état quantique orthogonal correspondant dans la base d'encodage résultant de l'étape $G_3$ ;

- le photon issu de la quatrième étape $G_4$ est propagé dans la chaîne de communication ;
- le récepteur $C_N$ détecte et mesure dans la base standard $B_0$ l'état |alpha$_{final}$> du photon transmis dans la chaîne de communication.
- les premier et second participants $C_i$ et $C_j$ échangent entre eux sur un canal de communication classique leurs décisions de transformation de bases d'encodage résultant des deuxième et troisième étapes $G_2$ et $G_3$ ;
- les premier et second participants $C_i$ et $C_j$ obtiennent une description de l'état quantique $q_q$ correspondant à l'un des états de base |0>, |1>,... |d-1>, grâce aux informations de bases d'encodage échangées entre et à la mesure de l'état final |alpha$_{final}$>.

Des exemples de canaux de communication classiques sont les connexions Ethernet, Wifi, ou encore les protocoles TCP/IP.

Après que les Q répétitions ont été effectuées, les premier et second participants $C_i$ et $C_j$ reconstituent, par concaténation, une séquence des descriptions des Q états quantiques $q_q$.

Il va maintenant être décrit d'une part, ce qui est entendu par le terme « description d'un état quantique $q_q$ », et d'autre part comment est réalisée la sécurisation de la transmission de la séquence d'états quantiques par le protocole décrit dans le précédent cas. Les première et deuxième actions effectuées par les premier et second participants $C_i$ et $C_j$ transcrivent une méthode d'application du principe du codage conjugué. Le codage conjugué consiste à encoder une information dans un état quantique en gardant secrète la base dans laquelle cette information est codée. Ce principe repose en particulier sur l'utilisation de deux bases d'encodage d'un espace vectoriel hilbertien incompatibles entre elles. Prenant en compte un état quantique dans une des deux bases, celui-ci, s'il est mesuré dans une base incompatible correspondante, va se comporter de manière complètement aléatoire. En effet, la définition donnée plus haut de deux bases incompatibles, c'est-à-dire, que la projection de chaque vecteur d'une des deux bases a des projections de longueurs égales sur chacun des vecteurs de l'autre base peut être formulée mathématiquement de la manière suivante, en prenant l'exemple de bases $B_0$ et $B_1$ précédemment évoquées :

Pour m et n des entiers compris entre 0 et d-1 :

[Math. 1]

$$\langle m|e_n\rangle = {}^{1}/_{\sqrt{d}}$$

et

[Math. 2]

$$\langle e_m|n\rangle = {}^{1}/_{\sqrt{d}}$$

où <..|..> désigne le produit scalaire de l'espace vectoriel hilbertien de définition des vecteurs d'état.

En mécanique quantique, les quantités $|\langle m | e_n\rangle|^2$ et $|\langle e_m | n \rangle|^2$ représentent respectivement les probabilités de trouver un système dans un état initial $|e_n\rangle$ dans l'état $|m\rangle$, si on effectuait une mesure dans la base standard $B_0$, et de trouver un système dans un état initial $|n\rangle$ dans l'état $|e_m\rangle$, si on effectuait une mesure dans la base incompatible $B_1$. Ainsi, ces probabilités sont toutes égales. Il peut donc en être conclu que la mesure, dans la base incompatible correspondante, d'un état préparé dans l'une ou l'autre des bases $B_0$ ou $B_1$ donnerait un résultat de mesure complètement aléatoire.

Ainsi, dans le procédé de transmission sécurisée d'une séquence de Q états quantiques, seules deux configurations permettent une transmission d'état quantique fournissant une information pertinente, c'est-à-dire, un résultat de la mesure par le récepteur $C_N$ pouvant être utilisé par les premier et second participants $C_i$ et $C_j$ : il s'agit soit du cas où les premier et second participants $C_i$ et $C_j$ décident tous les deux lors des deuxième et troisième étapes $G_2$ et $G_3$

d'appliquer respectivement les transformations P et $P^{(-1)}$, soit du cas où aucun des deux ne décide lors des deuxième et troisième étapes $G_2$ et $G_3$ d'appliquer la transformation P, respectivement $P^{(-1)}$. En effet, dans ces deux cas, la troisième étape $G_3$ permet de défaire la transformation effectuée lors de la deuxième étape $G_2$ et de revenir à la base $B_0$, dans laquelle la mesure faite par le récepteur $C_N$ donnera un résultat de mesure non aléatoire. L'état mesuré par le récepteur $C_N$ sera celui résultant des transformations issues des première et quatrième étapes $G_1$ et $G_4$. Ainsi, la sécurisation du procédé de transmission de la séquence d'états quantiques provient du fait que l'état mesuré par le récepteur $C_N$ est celui de la succession des transformations issues des première et quatrième étapes $G_1$ et $G_4$, mais ne permet pas de déterminer l'état, choisi par le premier participant Ci lors de la sous-étape $G_1$, transmis au deuxième participant $C_j$. Celui-ci est masqué par la combinaison des première et deuxième actions effectuées respectivement par le premier participant Ci et le second participant $C_j$.

Dans le cas où le premier participant Ci décide d'appliquer la transformation P lors de la deuxième étape $G_2$, et que le second participant $C_j$ décide de ne pas appliquer la transformation $P^{(-1)}$ lors de la sous-étape $G_3$, ou inversement, dans le cas où le premier participant Ci décide de ne pas appliquer la transformation P lors de la sous-étape $G_2$, et que le second participant $C_j$ décide d'appliquer la transformation $P^{(-1)}$ lors de la troisième étape $G_3$, l'information qui aura circulé dans la chaîne de communication et mesurée par le récepteur $C_N$ ne sera pas pertinente, c'est-à-dire, que le résultat de la mesure effectuée par le récepteur $C_N$ ne pourra pas être exploité par les premier et second participants Ci et $C_j$. En effet, elle correspondra à une mesure d'un état d'une base $B_0$ ou $B_1$ dans la base incompatible correspondante, et, comme expliqué précédemment, à un résultat complètement aléatoire. En pratique, ce résultat de la transmission du bit quantique correspondant sera jeté et mis à l'écart.

C'est pourquoi le terme «description d'un état quantique $q_q$ » est utilisé pour généraliser le résultat de la mesure faite par le récepteur $C_N$ car l'information quantique déduite de cette mesure n'est pas forcément pertinente et ne correspond pas nécessairement à la nature de l'état $q_q$.

Ainsi, selon les décisions prises par les premier et second participants $C_i$ et $C_j$, une information codée dans un bit quantique peut être transmise du premier participant Ci vers le second participant $C_j$ de manière sécurisée car les autres participants, différents de $C_i$ et $C_j$, n'ont accès, lorsque le récepteur $C_N$ annonce la mesure de l'état final qu'à l'information portant sur l'état $|alpha_{final}>$ du photon transmis dans la chaîne de communication. D'un point de vue statistique, en moyenne, et du fait des configurations où l'information quantique portant sur l'état $|alpha_{final}>$ est aléatoire et donc non pertinente, un état quantique sur deux peut être transmis par le premier participant Ci au second participant $C_j$ de manière cachée aux autres participants de la chaîne de communication.

On envisage ici un deuxième cas où le premier participant Ci est le participant émetteur $C_1$ mais que le participant $C_j$ n'est qu'un transformateur, différent du récepteur $C_N$. N est alors un entier supérieur ou égal à 3. Les étapes du procédé de transmission sécurisée de la séquence d'états quantiques peuvent alors consister en la répétition des étapes suivantes, pour q étant un entier compris entre 1 et Q :

- l'émetteur $C_1$ effectue la première action décrite dans le premier cas et composée des première et deuxième étapes successives $G_1$ et $G_2$;
- le photon issu de la deuxième étape $G_2$ est propagé dans la chaîne de communication ;
- le second participant $C_j$ effectue la deuxième action décrite dans le premier cas et composée des troisième et quatrième étapes successives $G_3$ et $G_4$ ;
- le photon issu de la quatrième étape $G_4$ est propagé dans la chaîne de communication ;
- le récepteur $C_N$ détecte et mesure dans la base standard $B_0$ l'état $|alpha_{final}>$ du photon transmis dans la chaîne de communication.
- l'émetteur $C_1$ et le second participant $C_j$ échangent entre eux sur un canal de communication classique les bases d'encodage résultant des étapes $G_2$ et $G_3$ ;
- l'émetteur $C_1$ et le second participant $C_j$ obtiennent une description de l'état quantique $q_q$ correspondant à l'un des états de base |0>, 11 >,... |d-1>, grâce aux informations de bases d'encodage échangées entre et à la mesure de l'état final $|alpha_{final}>$.

Après que les Q répétitions ont été effectuées, l'émetteur $C_1$ et le second participant $C_j$ reconstituent, par concaténation, une séquence des descriptions des Q états quantiques $q_q$, jetant, si nécessaire, les descriptions non pertinentes et non exploitables.

On envisage ici un troisième cas où le premier participant Ci est un transformateur, différent de l'émetteur $C_1$, et le participant $C_j$ est le récepteur $C_N$, et où N est un entier supérieur ou égal à 3. Les étapes du procédé de transmission sécurisée de la séquence d'états quantiques peuvent alors consister en la répétition des étapes suivantes, pour q étant un entier compris entre 1 et Q :

- l'émetteur $C_1$ envoie à travers la chaîne de communication d'un photon préparé dans un état quantique de base de référence |0> d'une base d'encodage $B_0$ de travail nommée base standard, orthonormée et de dimension d, et d'états de base orthogonaux |0>, |1>,... |d-1> :

- le premier participant Ci effectue la première action décrite dans le premier cas et composée des première et deuxième étapes successives $G_1$ et $G_2$ ;
- le photon issu de la deuxième étape $G_2$ est propagé dans la chaîne de communication ;
- le récepteur $C_N$ détecte le photon qu'il reçoit, effectue la deuxième action décrite dans le premier cas et composée des troisième et quatrième étapes successives $G_3$ et $G_4$, puis mesure dans la base standard B0 l'état $|alpha_{final}>$ du photon issu de la quatrième étape $G_4$ ; le premier participant Ci et le récepteur $C_N$ échangent entre eux sur un canal de communication classique crypté les bases d'encodage résultant des deuxième et troisième étapes $G_2$ et $G_3$ ;
- le premier participant Ci et le récepteur $C_N$ obtiennent une description de l'état quantique $q_q$ correspondant à l'un des états de base |0>, |1>,... |d-1>, grâce aux informations de bases d'encodage échangées entre et à la mesure de l'état final $|alpha_{final}>$.

Après que les Q répétitions ont été effectuées, le premier participant Ci et le récepteur $C_N$ reconstituent, par concaténation, une séquence des descriptions des Q états quantiques $q_q$, en jetant, si nécessaire, les descriptions non pertinentes et non exploitables.

On envisage ici un quatrième et dernier cas où le premier participant Ci est l'émetteur $C_1$ et le second participant $C_j$ est le récepteur $C_N$, et où N est un entier supérieur ou égal à 3. Les étapes du procédé de transmission sécurisée de la séquence d'états quantiques peuvent alors consister en la répétition des étapes suivantes, pour q étant un entier compris entre 1 et Q :

- l'émetteur $C_1$ effectue la première action décrite dans le premier cas et composée des première et deuxième étapes successives $G_1$ et $G_2$;
- le photon issu de la deuxième étape $G_2$ est propagé dans la chaîne de communication ;
- le récepteur $C_N$ détecte le photon qu'il reçoit, effectue la deuxième action décrite dans le premier cas et composée des troisième et quatrième étapes successives $G_3$ et $G_4$, puis mesure dans la base standard $B_0$ l'état $|alpha_{final}>$ du photon issu de l'étape $G_4$ ;
- l'émetteur $C_1$ et le récepteur $C_N$ échangent entre eux sur un canal de communication classique crypté les bases d'encodage résultant des étapes $G_2$ et $G_3$ ;
- l'émetteur $C_1$ et le récepteur $C_N$ obtiennent une description de l'état quantique $q_q$ correspondant à l'un des états de base |0>, |1>,... |d-1>, grâce aux informations de bases d'encodage échangées entre et à la mesure de l'état final $|alpha_{final}>$.

Après que les Q répétitions ont été effectuées, l'émetteur $C_1$ et le récepteur $C_N$ reconstituent, par concaténation, une séquence des descriptions des Q états quantiques $q_q$, en jetant, si nécessaire, les descriptions non pertinentes et on exploitables.

Pour les deuxième, troisième et quatrième cas précédemment décrits, le principe de sécurisation de la transmission de séquences d'états quantiques à travers la chaîne de communication des N participants et le concept de descriptions d'états quantiques sont les mêmes que ceux décrits pour le premier cas de transmission sécurisée.

Les première et deuxième actions réalisées respectivement par les premier et second participants distincts $C_i$ et $C_j$ dans les quatre différents cas de transmission sécurisée de séquences d'états quantiques vont maintenant être décrites de manière formelle.

On considère un espace vectoriel hilbertien d'encodage d'états quantiques de dimension d. La première action réalisée, lors de la q-ième répétition de la succession d'étapes précédemment décrites par le participant Ci peut ainsi consister en les étapes suivantes :

- le premier participant $C_i$ choisit une valeur $s_q$ égale à 0 ou 1
- le premier participant $C_i$ choisit une valeur entière m comprise entre 0 et d-1
- le premier participant $C_i$ applique une transformation $P^{sq}X_m$ au photon reçu à travers la chaîne de communication, ou dans le cas où i est égal à 1, au photon au début de la chaîne de communication,

où, il est rappelé, la notation P désigne une transformation permettant d'effectuer un changement de base d'encodage, depuis la base standard $B_0$ vers une base d'encodage $B_1$ orthonormée, i.e. pour m un entier compris entre 0 et d-1 :

[Math. 3]

$$P|m\rangle = e_m$$

et où la notation $X_m$ désigne les transformations suivantes, respectivement dans la base $B_0$ et la base $B_1$, pour m et t deux entiers compris entre 0 et d-1 :

[Math. 4]

$$X_m|t >= |t + m \; mod \; d >$$

et

[Math. 5]

$$X_m|e_t >= |e_{t+m \; mod \; d} >$$

où l'abréviation mod désigne la fonction mathématique modulo.

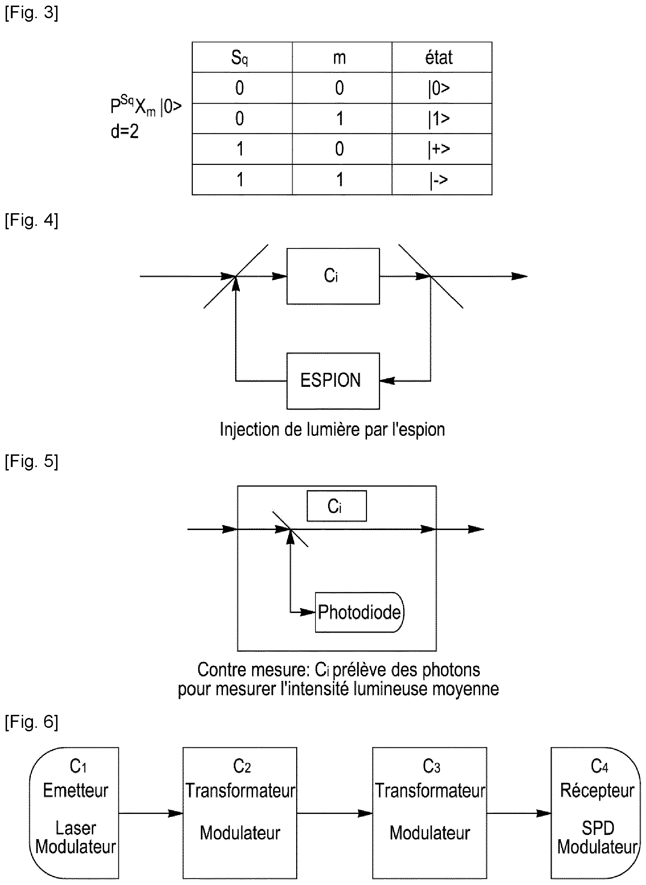

La transformation $X_m$ correspond à la première étape $G_1$, et la transformation $P^{sq}$ correspond à la deuxième $G_2$. L'effet de la première action effectuée par le premier participant Ci, $P^{sq}X_m$, sur un état de référence |0> est illustrée sur la figure 3. Les états |+> et |-> sont définis comme suit :

[Math. 6]

$$|+>= \frac{1}{\sqrt{2}}(|0> + |1>)$$

[Math. 7]

$$|->= \frac{1}{\sqrt{2}}(|0> - |1>)$$

La deuxième action réalisée, lors de la q-ième répétition de la succession d'étapes précédemment décrites par le second participant $C_j$ peut ainsi consister en les étapes suivantes :

- le second participant $C_j$ choisit une valeur $t_q$ égale à 0 ou 1 ;
- le second participant $C_j$ choisit une valeur n comprise entre 0 et d-1 ;
- le second participant $C_j$ applique une transformation $X_nP^{(-1)tq}$ au photon reçu à travers la chaîne de communication

où la notation $P^{(-1)}$ désigne la transformation permettant d'effectuer un changement de base d'encodage, depuis la base incompatible $B_1$ vers la base standard $B_0$, i.e. pour m un entier compris entre 0 et d-1 :

[Math. 8]

$$P^{(-1)}|e_m >= |m >$$

et où :

- la notation $P^{(-1)0}$ signifie que la transformation $P^{(-1)}$ n'a pas lieu ;
- la notation $P^{(-1)1}$ signifie que la transformation $P^{(-1)}$ a lieu,

La transformation $P^{(-1)tq}$ correspond à la troisième étape $G_3$, et la transformation $X_n$ correspond à la quatrième étape $G_4$.

Ainsi, dans les deux configurations permettant une transmission d'état quantique fournissant une information pertinente, c'est-à-dire soit la configuration où les participants $C_i$ et $C_j$ décident tous les deux lors des deuxième et troisième étapes $G_2$ et $G_3$ d'appliquer respectivement les transformations P et $P^{(-1)}$, soit la configuration où aucun des deux ne décide lors des deuxième et troisième étapes $G_2$ et $G_3$ d'appliquer respectivement les transformations P et

$P^{(-1)}$, la base d'encodage résultante à l'étape $G_4$ est la base standard $B_0$. L'état final |alpha$_{final}$> est égal à |m+n mod d> et peut être mesuré dans la base standard $B_0$ par le récepteur $C_N$. Le résultat de la mesure annoncé par le récepteur est m+n mod d. Tous les participants ignorant la valeur de m et n, c'est-à-dire tous les participants sauf les premier et second participants $C_i$ et $C_j$ n'apprennent rien de la valeur m+n mod d. La transformation $X_n$ a pour effet de masquer l'état transmis par le premier participant $C_i$ lorsqu'il est mesuré et annoncé par le récepteur $C_N$. Du fait de la divulgation du résultat de la mesure par le récepteur $C_N$, m+n mod d, le participant $C_j$ peut ainsi déduire l'état |m> que lui a transmis le participant $C_i$. La transmission de l'état quantique par le premier participant $C_i$ au second participant $C_j$ a bien été effectuée de manière sécurisée, car tous les autres participants de la chaîne connaissent seulement le résultat m+n mod d de la mesure effectuée par le récepteur $C_n$.

Ainsi, l'application du codage conjugué par l'intermédiaire de l'utilisation de bases d'encodage incompatibles permet une transmission sécurisée d'un état quantique, ou information quantique, entre deux premier et second participants Ci et Cj, dans laquelle l'état quantique transmis est inconnu des autres participants de la chaîne de communication.

De manière plus générale, il peut être envisagé que la transmission d'états quantiques par le premier participant Ci au second participant $C_j$ soit répétée pour transmettre une pluralité de messages. Dans ce cas, Ci peut envoyer a posteriori à $C_j$ les décisions qu'il a prises aux différentes deuxième étapes répétées, et $C_j$ peut sélectionner les informations issues de mesures pour lesquelles il a pris des décisions correctes lors des différentes troisièmes étapes G3 répétées.

Plus théoriquement, derrière l'utilisation du codage conjugué se cache l'utilisation du principe d'incertitude de la physique quantique. L'utilisation de bases conjuguées a pour effet que la lecture dans une base d'une information codée dans une autre base donne une valeur complètement aléatoire. Il s'agit là d'une incompatibilité maximale, car on parle d'incompatibilité dès qu'il y a incertitude sur la valeur envoyée.

Dans les deux autres configurations ne permettant pas une transmission d'état quantique fournissant une information pertinente, c'est-à-dire, comme expliqué plus haut, dans le cas où le participant Ci décide d'appliquer la transformation P lors de la sous-étape $G_2$, et que le participant $C_j$ décide de ne pas appliquer la transformation $P^{(-1)}$ lors de la sous-étape $G_3$, ou inversement, dans le cas où le participant Ci décide de ne pas appliquer la transformation P lors de la sous-étape $G_2$, et que le participant $C_j$ décide d'appliquer la transformation $P^{(-1)}$ lors de la sous-étape $G_3$, le résultat de la mesure annoncé par le récepteur $C_N$ sera aléatoire et jeté et mis à l'écart.

Selon un mode de réalisation du procédé de transmission sécurisée d'une séquence d'états quantiques, la dimension d de l'espace vectoriel hilbertien de codage des vecteurs d'états est égale à 2.

Selon un mode de réalisation de l'invention, des mécanismes de contre-mesure peuvent être mis en place afin d'éviter que des tiers puissent apprendre les modulations effectuées par les participants intermédiaires et ainsi apprendre les informations secrètes échangées.

En particulier, une attaque possible consister à injecter de la lumière avec une caractéristique donnée (longueur d'onde, polarisation, et temps) et de la mesurer après le passage par un participant intermédiaire afin d'apprendre ses caractéristiques de modulation.

Afin d'éviter cette attaque, des filtres peuvent être mis en place. Dans la mesure où les modulateurs possèdent déjà des caractéristiques de filtrage en polarisation, on peut simplement ajouter un filtre fréquentiel, afin de laisser passer uniquement la lumière à une fréquence prévue, et une porte temporelle afin de ne laisser passer que les photons à des instants prévus (correspondant aux transmissions par l'émetteur $C_1$).

Cette stratégie fonctionne en imposant des contraintes sur les signaux optiques transmis par l'émetteur $C_1$.

Le filtre fréquentiel peut être mis en oeuvre, par exemple, par un étalon de Fabry-Perot, et la porte temporelle peut être un modulateur d'intensité électro-optique, par exemple similaire à celui mis en place par l'émetteur $C_1$.

Dès lors, les seules attaques possibles seraient d'injecter une lumière avec les mêmes caractéristiques que celles prévues par le système. Cela n'est possible qu'en utilisateur un séparateur de faisceaux.

L'utilisation d'un séparateur de faisceaux engendrerait inévitablement une diminution de la puissance optique. En outre, un séparateur ne permet de récupérer la lumière injecté par l'adversaire car elle ne peut pas être distinguée du faisceau « légitime » transmis par l'émetteur. Cette diminution et cette perturbation du flux optiques peuvent être détectées, par exemple, par le mécanisme décrit ci-dessous.

Un autre mode de réalisation du premier cas de transmission sécurisée, où les premier et second participants $C_i$ et $C_j$ sont des participants différents des participants $C_1$ et $C_N$, c'est-à-dire qu'ils ne sont ni émetteur, ni récepteur, mais simplement des transformateur et que la chaîne de communication comprend un nombre N de participants supérieur ou égal à 4, va être décrit, où les deuxième et quatrième étapes $G_2$ et $G_4$ peuvent être suivies d'étapes complémentaires visant à prévenir d'attaques d'espions de la transmission d'états quantiques par canaux cachés.

Lors de la q-ième répétition de la succession d'étapes du procédé de transmission sécurisée d'une séquence de Q états quantiques $q_q$, l'étape $G_2$ est suivie des étapes successives suivantes :

- lors d'une cinquième étape $G_5$, une portion $P_{seq1}$ de la puissance lumineuse provenant du participant $C_{i-1}$ peut être prélevée ;

- lors d'une sixième étape $G_6$, la portion $P_{seq1}$ peut être comparée avec une portion $P_{seq1'}$ de la puissance lumineuse $P_{seq}$ de la séquence de photons envoyée par l'émetteur $C_1$, afin de détecter une potentielle injection de photons espions entre le participant $C_{i-1}$ et le premier participant $C_i$.

L'étape $G_4$ peut elle aussi être suivie des étapes successives suivantes :

- lors d'une septième étape $G_7$, une portion $P_{seq2}$ de la puissance lumineuse provenant du participant $C_{j-1}$ peut être prélevée ;
- lors d'une huitième étape $G_8$, la portion $P_{seq2}$ peut être comparée avec une portion $P_{seq2'}$ de la puissance lumineuse $P_{seq}$-$P_{seq1}$, afin de détecter une potentielle injection de photons espions entre le participant $C_{j-1}$ et le second participant $C_j$.

En effet, il peut être envisagé que, puisque les premier et second participants $C_i$ et $C_j$ sont des transformateurs ne pouvant mesurer de puissance lumineuse, un espion applique l'attaque suivante : dans le cas de bits quantiques encodés dans la phase de photons, l'espion pourrait injecter entre l'émetteur $C_1$ et le participant Ci des photons de polarisation différente de ceux émis par l'émetteur $C_1$, qui est un participant légitime. La figure 4 montre un exemple de réalisation de cette attaque par canaux cachés sur un premier participant $C_i$ par un espion dans un dispositif de communication quantique optique. Il suffirait à l'espion de combiner ses photons espions aux photons émis légitimement par l'émetteur $C_1$, en utilisant par exemple un combinateur de polarisation, et de récupérer juste après le participant Ci les photons espions qu'il aura introduits. Ainsi, l'espion pourrait mesurer la modulation appliquée par le premier participant $C_i$, et apprendre par exemple les valeurs de $s_q$ et m choisies par le premier participant Ci. La même attaque d'injection de photons espions en amont du second participant $C_j$ et récupération de photons modulés par le second participant $C_j$ juste après le second participant $C_j$ pourrait être appliquée. Une condition nécessaire pour réaliser ce type d'attaque est pour l'espion de pouvoir se positionner juste avant et juste après un participant. Ainsi, ce type d'attaque n'est pas possible sur les participants émetteur $C_1$ et récepteur $C_N$. La figure 4 illustre schématiquement le principe d'attaque par canal caché tel que décrit précédemment.

Les prélèvements de puissance lumineuse effectué lors des cinquième et septième étapes $G_5$ et $G_7$ permettent la mesure ainsi que la vérification de la conformité de ces mesures, par les comparaisons effectuées lors des sixième et huitième étapes $G_6$ et $G_8$, avec la puissance lumineuse $P_{seq}$ envoyée par l'émetteur $C_1$. Ces prélèvements et comparaisons constituent ainsi des contre-mesures effectuées respectivement par le premier participant Ci et le second participant $C_j$. La figure 5 illustre schématiquement le principe de contre-mesure qui peut être effectuée par l'un des premier ou second participants $C_i$ ou $C_j$ lors des sixième et huitième étapes $G_6$ ou $G_8$.

Les cinquième, sixième, septième et huitième étapes $G_5$ à $G_8$ constituent donc une sécurité additionnelle du procédé de transmission d'une séquence d'états quantiques entre les premier et deuxième participants $C_i$ et $C_j$, car elles permettent de détecter d'éventuelles attaques par canaux cachés par des espions. Cette sécurité additionnelle peut être mise en oeuvre avec un matériel simple et peu coûteux.

Dans ce mode de réalisation, le principe d'incertitude assure également la sécurité. Supposons qu'un espion mesure les photons le premier participant Ci et le réémet un photon identique à celui qu'il a mesuré. S'il a mesuré dans une base d'encodage différente de celle choisie par le premier participant $C_i$, ce qui arrive une fois sur deux, alors l'espion va modifier le photon, du fait de l'équiprobabilité sur les résultats de mesure qu'il pourra obtenir. Les statistiques seront modifiées en conséquence de manière visible pour le premier participant Ci et le second participant $C_j$. En comparant une petite portion des photons reçus avec ceux envoyés, les premier et second participants $C_i$ et $C_j$, peuvent ainsi repérer un espion qui écoute leur conversation.

Ainsi ce mécanisme de sécurité additionnelle peut fonctionner de façon indépendante du filtre fréquentiel et de la porte temporelle décrits ci-dessus, mais il permet également un effet synergétique puisque chacun de ces deux mécanismes visent des attaques complémentaires et leur utilisation conjointe permet ainsi que bloquer un vaste ensemble d'attaques possibles.

Selon un mode de réalisation, ces deux mécanismes additionnels sont mis en oeuvre de façon conjointe.

Préférentiellement, le degré de liberté des photons encodant les bits quantiques est choisi parmi la phase, la différence de phase, la localisation temporelle, la polarisation ou la fréquence du photon.

Avantageusement, la séquence des Q états quantiques $q_q$ pour q entier compris entre 1 et q est choisie de manière aléatoire dans le but d'établir une clé quantique distribuée entre les participants Ci et Cj. Dans ce cas particulier, l'étape d'échange des décisions de transformation des étapes $G_2$ et $G_3$ correspondant à l'opération de « key sifting » effectuée de manière standard dans un protocole de distribution de clé quantique.

La mise en oeuvre du procédé de transmission sécurisée d'une séquence de Q états quantiques $q_q$, q étant un entier compris entre 1 et Q peut être réalisée à l'aide d'un dispositif comprenant :

- un laser apte à générer des photons et un modulateur initial apte à moduler un degré de liberté d'un photon généré, ledit laser et ledit modulateur initial étant associé à l'émetteur $C_1$

- N-2 modulateurs intermédiaires aptes à moduler un degré de liberté d'un photon reçu, chacun des N-2 modulateurs intermédiaires étant associé à un participant intermédiaire $C_k$, parmi les N-2 participants intermédiaires $C_2$ à $C_{N-1}$ distincts de l'émetteur $C_1$ et du récepteur $C_N$
- un détecteur de photons apte à détecter des photons uniques et un modulateur final apte à moduler un degré de liberté d'un photon reçu ; ledit détecteur de photons et ledit modulateur final étant associé au récepteur $C_N$

La figure 6 illustre une réalisation de ce dispositif pour une chaîne de communication à quatre participants.

Le dispositif précédemment décrit peut être utilisé de la manière suivante. Une fois les premier et second participants $C_i$ et $C_j$ choisis, un laser associé à l'émetteur $C_1$ génère, suite à une commande de l'émetteur $C_1$, un flux de photons encodant une séquence bits quantiques. Le flux de photons est transmis dans la chaîne de communication par l'intermédiaire du modulateur initial, des N-2 modulateurs intermédiaires, du modulateur final, et jusqu'au détecteur de photons.

Dans le cadre de la transmission d'une séquence de Q états quantiques codés sur Q photons, pour chaque photon :

- au cours de la transmission dudit photon à travers la chaîne de communication, le premier participant Ci effectue sur ledit photon une première action, comprenant une première étape $G_1$ de décision et une deuxième étape de décision $G_2$, en commandant un modulateur lui étant associé, c'est-à-dire soit le modulateur initial, soit l'un des N-2 modulateurs,
- suite à la première action du premier participant Ci sur ledit photon, la transmission du photon est poursuivie jusqu'au second participant $C_j$, qui effectue sur le photon, après réception de celui-ci, une deuxième action, comprenant une troisième étape $G_3$ de décision et une quatrième étape de décision $G_4$, en commandant un modulateur lui étant associé, c'est-à-dire soit l'un des N-2 modulateurs intermédiaires, soit le modulateur final. Suite à la deuxième action du second participant $C_j$ sur le photon, la transmission dudit photon est poursuivie jusqu'à la réception de celui-ci par le détecteur de photons associé au récepteur $C_N$,
- le récepteur $C_N$ mesure l'état final du bit quantique codé dans le photon qu'il reçoit et partage le résultat de la mesure avec les autres participants de la chaîne de communication,
- les premier et second participants $C_i$ et $C_j$ échangent sur un canal de communication classique les décisions prises au cours des deuxième et troisième étapes $G_2$ et $G_3$,
- les premier et second participants $C_i$ et $C_j$ déduisent une description de l'état quantique à l'aide des décisions échangées et de la mesure par le récepteur $C_N$ de l'état final du bit quantique codé dans le photon détecté par le détecteur de photons associé au récepteur $C_N$.

Ainsi, le premier participant $C_i$ et le second participant $C_j$ reconstituent, par concaténation, une séquence des descriptions des Q états quantiques transmis, en jetant, si nécessaire, les descriptions non pertinentes et non exploitables, dans les cas précédemment décrits.

L'avantage du procédé de transmission séquences d'états quantiques entre plusieurs participants présenté dans cette demande est donc de pouvoir être mis en oeuvre par un dispositif ne comprenant qu'un seul laser et qu'un seul détecteur de photons. Ces derniers composants étant en général les éléments matériels les plus coûteux, le protocole présenté ici permet donc de réaliser une transmission de séquences d'états quantiques avec un coût par participant moindre.

Dans le cas précédemment décrit où les premier et second participants $C_i$ et $C_j$ sont des participants différents des participants $C_1$ et $C_N$, le dispositif précédemment décrit peut être complété par :

- un premier séparateur de faisceau Si positionné en amont du modulateur associé au premier participant C;,
- une première photodiode $PD_i$ associée au premier participant $C_i$ et apte à mesurer une puissance lumineuse,
- un deuxième séparateur de faisceau $S_j$ positionné en amont du modulateur associé au second participant $C_j$,
- une deuxième photodiode $PD_j$ associée au second participant $C_j$ et apte à mesurer une puissance lumineuse.

Le séparateur de faisceau Si sépare le flux de photons reçu du participant $C_{i-1}$ dans deux directions distinctes, l'une en direction du modulateur du premier participant $C_i$ puis vers la suite de la chaîne de communication, l'autre en direction de la photodiode $PD_i$. Le deuxième séparateur de faisceau $S_j$ sépare le flux de photons reçu du participant $C_{j-1}$ dans deux directions distinctes, l'une en direction du modulateur du second participant $C_j$ puis vers la suite de la chaîne de communication, l'autre en direction de la deuxième photodiode $PD_j$.

Ces composants supplémentaires permettent la mise en oeuvre de la sécurisation du procédé de transmission de séquences d'états quantiques vis-à-vis des attaques par canaux cachés. Ils permettent en particulier la réalisation des cinquième, sixième, septième et huitième étapes $G_5$ à $G_8$ précédemment décrites. Les cinquième et septième étapes $G_5$ et $G_7$ sont réalisées respectivement par la mesure de la puissance lumineuse $P_{seq1}$ par la photodiode $PD_i$ et par la mesure de la puissance lumineuse $P_{seq2}$. Les sixième et huitième étapes de comparaison $G_6$ et $G_8$ sont réalisées en utilisant les mesures des puissances lumineuses $P_{seq1}$ et $P_{seq2}$ et des valeurs de prédiction de puissance lumineuses $P_{seq1'}$ et $Ps_{eq2'}$. Par exemple, lorsque l'une des comparaisons, entre $P_{seq1}$ et $P_{seq1'}$ d'une part, et entre $P_{seq2}$ et $P_{seq2'}$ d'autre part, a pour résultat une inégalité, une attaque par un espion, par exemple par injection de photons, peut être détectée.

Dans cette configuration, les premier et deuxième séparateurs de faisceau Si et $S_j$ sont configurés de manière à ce qu'avec une probabilité p, les photons qui les traversent soient dirigés vers respectivement les première et deuxième photodiodes $PD_i$ et $PD_j$. Les photodiodes $PD_i$ et $PD_j$ peuvent mesurer la puissance lumineuse moyenne sur une période de temps donnée.

Ainsi, ces composants supplémentaires sont également beaucoup plus simples et moins coûteux en comparaison avec du matériel classiquement utilisé dans les dispositifs de communication quantique tels que par exemple des détecteurs de photon unique.

Lorsque le degré de liberté des photons pour encoder les bits quantiques est la phase, le modulateur initial, les N-2 modulateurs intermédiaires et le modulateur peuvent être des modulateurs de phase. Par exemple, le modèle LN53S-FC ou LN65S-FC commercialisé par la société Thorlabs peut être utilisé.

Lorsque le degré de liberté des photons pour encoder les bits quantiques est la polarisation des photons, le modulateur initial, les N-2 modulateurs intermédiaires et le modulateur peuvent être des modulateurs de polarisation. Par exemple, un modèle de la série de produits PSC-LN séries commercialisé par la société iXblue Photonics peut être utilisé.

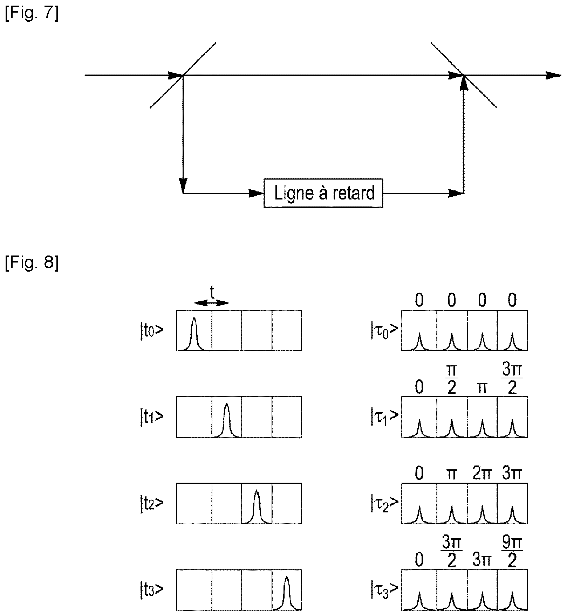

Lorsque le degré de liberté des photons pour encoder les bits quantiques est la localisation temporelle des photons, le modulateur initial, les N-2 modulateurs intermédiaires et le modulateur peuvent comprendre chacun un nombre d de lignes à retard et un nombre 2d de lames séparatrices, où d représente la dimension de l'espace vectoriel hilbertien de représentation des états quantiques. La superposition de localisations temporelles à réaliser pour créer une base incompatible peut être obtenue en programmant les lames séparatrices. La figure 7 illustre un dispositif modulateur de localisation temporelle, dans le cas où d est égal à 2.

La figure 8 montre un exemple de couple de bases incompatibles conçues dans le cas où le degré de liberté des photons est la localisation pour un espace vectoriel hilbertien de dimensions 4. Les quatre localisations temporelles correspondant aux états de la base $|t_0>$, $|t_1>$, $|t_2>$ et $|t_3>$ sont $t_0$, $t_1$ égale à $t_0+\tau$, $t_2$ égale à $t_0+2\tau$ et $t_3$ égale à $t_0+3\tau$. Un exemple de base incompatible peut-être alors la base $|\tau_0>$, $|\tau_1>$, $|\tau_2>$ et $|\tau_3>$ telle que représentée à la figure 8. Une utilisation de ces deux bases est retrouvée dans l'article « Provably secure and high-rate quantum key distribution with time-bin qubits » (Islam et al., Sci. Adv. 2017 ;3).

Des post-traitements tels que la correction d'erreur ou l'amplification de confidentialité standard dans des protocoles de distribution de clé quantique peuvent être également appliqués suite à la mise en oeuvre des différents modes de réalisation de procédé de transmission sécurisée de séquences d'états quantiques.

Selon certains modes de réalisation, l'invention peut présenter plusieurs avantages :

- le procédé de transmission d'états quantiques peut être doublement sécurisé, d'une part de manière intrinsèque par l'application du principe de codage conjugué, d'autre part de manière extrinsèque par la contre-mesure mise en oeuvre pour détecter des attaques par canaux cachés ;
- le matériel utilisé pour la mise en oeuvre du procédé de transmission présenté est simple est peu coûteux car il ne nécessite que deux composants coûteux, un laser et un détecteur de photon unique, ainsi que d'autres composants beaucoup plus accessibles, modulateurs, lignes à retard, lames séparatrices, photodiodes classiques.

Selon des modes de réalisation de l'invention, il est possible de connecter différents dispositifs, afin de former des réseaux de transmission à plus large échelle.

Ainsi, chaque dispositif tel que précédemment décrit peut permettre de couvrir une zone géographique de taille modérée, correspondant par exemple à une zone urbaine ou métropolitaine (de type MAN pour « *Metropolitan Area Network* »). Ces réseaux peuvent être connectés ensemble à une échelle nationale ou internationale en des points d'interconnexion ayant pour fonctions de transmettre les clés d'un réseau à l'autre. Ces interconnexion de réseaux peuvent par exemple se faire par le truchement de réseaux satellites, permettant d'interconnecter les réseaux métropolitains.

## Revendications

**1.** Procédé de transmission sécurisée d'une séquence de Q états quantiques $q_q$ encodée sous la forme d'une séquence de Q photons, q étant un entier compris entre 1 et Q, entre un premier participant ($C_i$) et un second participant ($C_j$), choisis parmi une pluralité de N participants distincts ($C_1$), ... ($C_i$), ... ($C_j$), ... ($C_N$) d'un même canal de communication quantique formant une chaîne de communication entre un émetteur ($C_1$) et un récepteur ($C_N$), où N est un entier supérieur ou égal à 3, dans lequel le premier participant ($C_i$) est situé en amont du second participant ($C_j$) dans la chaîne de communication,

ledit procédé comprenant, dans l'ordre :

- la succession des étapes suivantes, répétée de q=1 à Q :

  ◦ une première action effectuée par l'émetteur (C1) comprenant la préparation par l'émetteur (C1) d'un photon dans un état quantique de départ |u> d'une base d'encodage Ba orthonormée de dimension d et d'états de base |e0>, |$e_1$>,... |$e_{d-1}$>, avec a choisi au hasard entre 0 et 1,
  ◦ transmission du photon préparé dans la chaîne de communication,
  ◦ une deuxième action effectuée par le premier participant ($C_i$) sur ledit photon, de décision de transformation ou non de l'état quantique du photon transmis, en un état quantique de base orthogonal dans la base d'encodage $B_0$ et dans la base d'encodage $B_1$
  ◦ une troisième action effectuée par le second participant ($C_j$) sur ledit photon, de décision de transformation ou non de l'état quantique du photon reçu du participant immédiatement précédent ($C_{j-1}$) en un état quantique orthogonal correspondant dans la base d'encodage $B_0$ et dans la base d'encodage $B_1$
  ◦ une quatrième action effectuée par le récepteur ($C_N$) comprenant la mesure, dans la base standard $B_0$ ou dans la base $B_1$, de l'état final |$alpha_{final}$> du photon transmis dans la chaîne de communication,
  ◦ échange sur un canal de communication classique entre au moins une partie des participants, d'au moins une partie des décisions parmi celles de la base de départ a, de l'état de départ |u>, de la base de mesure choisie par ledit récepteur ($C_N$) et du résultat de la mesure de |$alpha_{final}$> dans cette base de mesure, afin de permettre à chacun desdits premier et second participants d'obtenir des informations dudit émetteur, dudit récepteur et de l'autre parmi lesdits premier et second participants,
  ◦ obtention, entre les premier et second participants ($C_i$) et ($C_j$), d'une description de l'état quantique transmis $q_q$ correspondant à l'un des états de base |$e_0$>, |$e_1$>,... |$e_{d-1}$>, grâce à ladite partie des décisions et dudit résultat de la mesure ;

- puis, la reconstitution, par les premier et second participants ($C_i$) et ($C_j$), par concaténation, d'une séquence des descriptions des Q états quantiques transmis $q_q$, pour q allant de 1 à Q, et

dans lequel i est différent de 1 et N, et j est différent de 1 et N, la séquence des Q photons encodant la séquence des Q états quantiques $q_q$ présente une puissance lumineuse donnée $P_{seq}$ et N est un entier supérieur ou égal à 4, et dans lequel :

- Ladite deuxième action comprend :

  ◦ une étape ($G_5$) de prélèvement d'une première portion ($P_{seq1}$) de la puissance lumineuse ($P_{seq}$) du flux de photons reçu du participant ($C_{i-1}$) précédant immédiatement le premier participant ($C_i$),
  ◦ une étape ($G_6$) de comparaison de la première portion ($P_{seq1}$) avec une seconde portion ($P_{seq1'}$) de la puissance lumineuse ($P_{seq}$) du flux de photons envoyé par l'émetteur ($C_1$) afin de détecter une potentielle injection de photons espions avant le premier participant ($C_i$),

- ladite troisième action comprend :

  ◦ une étape ($G_7$) de prélèvement d'une troisième portion ($P_{seq2}$) de la puissance lumineuse du flux de photons reçu du participant ($C_{j-1}$) précédant immédiatement le second participant ($C_j$),
  ◦ une étape ($G_8$) de comparaison de la troisième portion ($P_{seq2}$) avec une quatrième portion ($P_{seq2'}$) de la différence entre la puissance lumineuse du flux de photons envoyé par l'émetteur ($P_{seq}$) et la première portion ($P_{seq1}$) afin de détecter une potentielle injection de photons espions avant le second participant ($C_j$).

2. Procédé selon la revendication précédente, dans lequel, pour chaque répétition de q=1 à Q de la succession d'étapes :

- La première action, effectuée par l'émetteur (C1), comprend les étapes suivantes :
  - ◦ Choisir une valeur sq égale à 0 ou 1
  - ◦ Choisir une valeur l comprise entre 0 et d-1
  - ◦ Appliquer une transformation $P^{sq}X_l$ à un photon de référence créé par l'émetteur au début de la chaîne de communication
- la deuxième action, effectuée par le premier participant (Ci), comprend les étapes suivantes :
  - ◦ Choisir une valeur m comprise entre 0 et d-1
  - ◦ Appliquer une transformation Xm au photon reçu à travers la chaîne de communication,
- la troisième action, effectuée par le deuxième participant (Cj), comprend les étapes suivantes :
  - ◦ Choisir une valeur n comprise entre 0 et d-1
  - ◦ Appliquer une transformation Xn au photon reçu à travers la chaîne de communication,
- la quatrième action, effectuée par le récepteur ($C_N$), comprend les étapes suivantes :
  - ◦ Choisir une valeur tq égale à 0 ou 1
  - ◦ Appliquer une transformation $P^{(-1)tq}$ au photon reçu à travers la chaîne de communication,

dans lequel :

la notation $P^1$ signifie que la transformation P a lieu,
la notation $P^0$ signifie que la transformation P n'a pas lieu,
la notation $P^{(-1)1}$ signifie que la transformation $P^{(-1)}$ a lieu,
la notation $P^{(-1)0}$ signifie que la transformation $P^{(-1)}$ n'a pas lieu,
la notation $X_m$ désigne une transformation permettant de passer de l'état quantique de base |t>, t étant un entier compris entre 0 et d-1, à l'état orthogonal c|(t+m) mod d> dans la base $B_0$ ou la transformation permettant de passer d'un état $|e_t>$ à $d|e_t+m$ mod d> dans la base $B_1$, pour m un entier compris entre 0 et d-1, et c et d des phases globales induites par ces transformations.

3. Procédé de transmission sécurisée selon la revendication 1, dans lequel, pour chaque répétition de q=1 à Q de la succession d'étapes :

- la première action, comprend la préparation par l'émetteur (C1) d'un photon dans un état quantique de base de référence |0> d'une base d'encodage $B_0$ orthonormée, nommée base standard de dimension d,
- la deuxième action effectuée par le premier participant ($C_i$), comprend les étapes suivantes :
  - ◦ Choisir une valeur sq égale à 0 ou 1
  - ◦ Choisir une valeur m comprise entre 0 et d-1
  - ◦ Appliquer une transformation $P^{sq}X_m$ au photon reçu à travers la chaîne de communication, ou dans le cas où i est égal à 1, au photon au début de la chaîne de communication,
- la troisième action, effectuée par le second participant ($C_j$), comprend les étapes suivantes :
  - ◦ Choisir une valeur tq égale à 0 ou 1
  - ◦ Choisir une valeur n comprise entre 0 et d-1
  - ◦ Appliquer une transformation $X_nP^{(-1)tq}$ au photon reçu à travers la chaîne de communication,

dans lequel :

- la notation $P^1$ signifie que la transformation P a lieu,
- la notation $P^0$ signifie que la transformation P n'a pas lieu,

- la notation $P^{(-1)1}$ signifie que la transformation $P^{(-1)}$ a lieu,
- la notation $P^{(-1)0}$ signifie que la transformation $P^{(-1)}$ n'a pas lieu,
- la notation $X_m$ désigne une transformation permettant de passer de l'état quantique de base |t>, t étant un entier compris entre 0 et d-1, à l'état orthogonal |(t+m) mod d> dans la base $B_0$ ou la transformation permettant de passer d'un état $|e_t>$ à $|e_{t+m \bmod d}>$ dans la base $B_1$, pour m un entier compris entre 0 et d-1.

**4.** Procédé de transmission sécurisée selon l'une des revendications 1 à 3, dans lequel ladite dimension d est égale à 2.

**5.** Procédé selon l'une des revendications précédentes, dans lequel ledit photon est transmis à travers un filtre fréquentiel et une porte temporelle.

**6.** Procédé de transmission sécurisée, selon l'une des revendications 1 à 5 dans lequel chaque état quantique $q_q$ est codé dans un degré de liberté du photon choisi parmi la phase, la différence de phase, la localisation temporelle, la polarisation ou la fréquence du photon.

**7.** Procédé de transmission sécurisée selon l'une des revendications 1 à 6 dans lequel la séquence de Q états quantiques $q_q$ est choisie de manière aléatoire dans le but d'établir une clé quantique.

**8.** Dispositif pour la mise en oeuvre du procédé de transmission sécurisée selon l'une des revendications 1 à 5, ou 7, comprenant :

- un laser apte à générer des photons et un modulateur initial apte à moduler un degré de liberté d'un photon généré,
- N-2 modulateurs intermédiaires aptes à moduler un degré de liberté d'un photon reçu,
- un détecteur de photons apte à détecter des photons uniques et un modulateur final apte à moduler un degré de liberté d'un photon reçu,

dans lequel :

- le laser et le modulateur initial sont associés à l'émetteur ($C_1$) et sont aptes à être commandés par l'émetteur ($C_1$),
- chacun des N-2 modulateurs intermédiaires est associé à un participant intermédiaire ($C_k$) parmi les N-2 participants intermédiaires ($C_2$) à ($C_{N-1}$) distincts de l'émetteur ($C_1$) et du récepteur ($C_N$) et est apte à être commandé par ledit participant intermédiaire ($C_k$),
- le détecteur de photons et le modulateur final sont associés au récepteur ($C_N$) et sont aptes à être commandés par le récepteur ($C_N$), et comportant en outre,
dans le cas où le premier participant ($C_i$) et le second participant ($C_j$) sont tous les deux distincts de l'émetteur ($C_1$) et du récepteur ($C_N$) :

  - un premier séparateur de faisceau ($S_i$) positionné en amont du modulateur associé au premier participant ($C_i$),
  - une première photodiode ($PD_i$) associée au premier participant ($C_i$) et apte à mesurer une puissance lumineuse d'un flux de photons,
  - un deuxième séparateur de faisceau ($S_j$) positionné en amont du modulateur associé au second participant ($C_j$),
  - une deuxième photodiode ($PD_j$) associée au second participant ($C_j$) et apte à mesurer une puissance lumineuse d'un flux de photons,

dans lequel :

  - le premier séparateur de faisceau ($S_i$) est apte à séparer un flux de photons reçu du participant précédant immédiatement le premier participant dans la chaîne de communication ($C_{i-1}$) dans deux directions distinctes, l'une en direction du modulateur du premier participant ($C_i$) puis vers la suite de la chaîne de communication, l'autre en direction de la première photodiode ($PD_i$),
  - le deuxième séparateur de faisceau ($S_j$) est apte à séparer un flux de photons reçu du participant précédant immédiatement le second participant dans la chaîne de communication ($C_{j-1}$) dans deux directions distinctes, l'une en direction du modulateur du second participant ($C_j$) puis vers la suite de la chaîne de communication, l'autre en direction de la deuxième photodiode ($PD_j$), dans le but de mettre en oeuvre le procédé de transmission sécurisée selon la revendication 1.

**9.** Dispositif pour la mise en oeuvre d'un procédé de transmission sécurisée selon la revendication 8, dans lequel :

- Le degré de liberté du photon choisi est la phase
- Le modulateur initial, les modulateurs intermédiaires et le modulateur final sont des modulateurs de phase.

**10.** Dispositif pour la mise en oeuvre du procédé de transmission sécurisée selon la revendication 8, dans lequel :

- Le degré de liberté du photon choisi est la polarisation
- Le modulateur initial, les modulateurs intermédiaires et le modulateur final sont des modulateurs de polarisation.

**11.** Dispositif pour la mise en oeuvre d'un procédé de transmission sécurisée selon la revendication 8, dans lequel :

- Le degré de liberté du photon choisi est la localisation temporelle
- Le modulateur initial, les modulateurs intermédiaires et le modulateur final comprennent chacun un nombre de lignes à retard égal à la dimension de la base d'encodage des bits quantiques et un nombre de lames séparatrices égal au double du nombre de lignes à retard.

## Patentansprüche

**1.** Verfahren zur sicheren Übertragung einer Folge von Q Quantenzuständen $q_q$, die in Form einer Folge von Q Photonen kodiert ist, wobei q eine ganze Zahl zwischen 1 und Q ist, zwischen einem ersten Teilnehmer ($C_i$) und einem zweiter Teilnehmer ($C_i$), die aus einer Vielzahl von N verschiedenen Teilnehmern ($C_1$), ... ($C_i$), ... ($C_j$), ...($C_N$) eines selben Quantenkommunikationskanals ausgewählt wurden, der eine Kommunikationskette zwischen einem Sender ($C_1$) und einen Empfänger ($C_N$) bildet, wobei N ist eine ganze Zahl größer als oder gleich 3 ist, wobei der erste Teilnehmer ($C_i$) in der Kommunikationskette vor dem zweiten Teilnehmer ($C_j$) liegt,

wobei das Verfahren Folgendes in folgender Reihenfolge umfasst:

- die Abfolge der folgenden Schritte, die von q = 1 bis Q wiederholt werden:

◦ eine erste vom Sender (C1) durchgeführte Aktion, umfassend die Bereitstellung eines Photons durch den Sender (C1) in einem Anfangsquantenzustand |u> einer orthonormalisierten Kodierbasis Ba der Dimension d und der Basiszustände |e0>, |e1 >, ... |ed-1>, wobei a zufällig zwischen 0 und 1 ausgewählt wird,
◦ Übertragung des bereitgestellten Photons in der Kommunikationskette,
◦ eine zweite von dem ersten Teilnehmer ($C_i$) an dem Photon durchgeführte Aktion des Entscheidens, den Quantenzustand des übertragenen Photons in einen orthogonalen Basisquantenzustand in der Kodierbasis $B_0$ und in der Kodierbasis $B_1$ zu transformieren oder nicht
o eine dritte von dem zweiten Teilnehmer ($C_j$) an dem Photon durchgeführte Aktion des Entscheidens, den Quantenzustand des vom unmittelbar vorhergehenden Teilnehmer ($C_{j-1}$) empfangenen Photons in einen entsprechenden orthogonalen Quantenzustand in der Kodierbasis $B_0$ und in der Kodierbasis $B_1$ zu transformieren oder nicht
o eine vierte von dem Empfänger ($C_N$) durchgeführte Aktion, umfassend die Messung des finalen Zustands $|alpha_{final}>$ des in der Kommunikationskette übertragenen Photons in der Standardbasis $B_0$ oder in der Basis $B_1$,
o Austausch mindestens eines Teils der Entscheidungen aus denen zu der Anfangsbasis a, dem Anfangszustand |u>, der vom Empfänger ($C_N$) gewählten Messbasis und dem Ergebnis der Messung $|alpha_{final}>$ in dieser Messbasis auf einem klassischen Kommunikationskanal zwischen mindestens einem Teil der Teilnehmer, um es jedem von dem ersten und dem zweiten Teilnehmer zu ermöglichen, Informationen des Senders, des Empfängers und des anderen von dem ersten und dem zweiten Teilnehmer zu erhalten,
◦ Erhalten einer Beschreibung des übertragenen Quantenzustands $q_q$ zwischen dem ersten und dem zweiten Teilnehmer ($C_i$) und ($C_i$), der einem der Basiszustände $|e_0>$, $|e_1>$, ... $|e_{d-1}>$ entspricht, dank dem Teil der Entscheidungen und dem Ergebnis der Messung;

- dann die Neukonstituierung einer Folge von Beschreibungen der Q übertragenen Quantenzustände $q_q$, wobei q 1 bis Q durchläuft, durch Verkettung durch den ersten und den zweiten Teilnehmer ($C_i$) und ($C_j$) und

wobei i von 1 und N verschieden ist und j von 1 und N verschieden ist, die Folge von Q Photonen, die die Folge von Q Quantenzuständen $q_q$ kodiert, eine gegebene Lichtleistung $P_{seq}$ aufweist und N eine ganze Zahl größer als oder gleich 4 ist und wobei:

- die zweite Aktion Folgendes umfasst:

  ◦ einen Schritt ($G_5$) der Entnahme eines ersten Teils ($P_{seq1}$) der Lichtleistung ($P_{seq}$) des vom Teilnehmer ($C_{l-1}$) unmittelbar vor dem ersten Teilnehmer ($C_i$) empfangenen Photonenflusses,
  ◦ einen Schritt ($G_6$) des Vergleichens des ersten Teils ($P_{seq1}$) mit einem zweiten Teil ($P_{seq1'}$) der Lichtleistung ($P_{seq}$) des vom Sender ($C_1$) gesendeten Photonenflusses, um eine potenzielle Einspeisung von Spionagephotonen vor dem ersten Teilnehmer ($C_i$) zu detektieren,

- die dritte Aktion Folgendes umfasst:

  ◦ einen Schritt ($G_7$) der Entnahme eines dritten Teils ($P_{seq2}$) der Lichtleistung des vom Teilnehmer ($C_{j-i}$) unmittelbar vor dem zweiten Teilnehmer ($C_j$) empfangenen Photonenflusses,
  ◦ einen Schritt ($G_8$) des Vergleichens des dritten Teils ($P_{seq2}$) mit einem vierten Teil ($P_{seq2'}$) der Differenz zwischen der Lichtleistung des vom Sender gesendeten Photonenflusses ($P_{seq}$) und dem ersten Teil ($P_{seq1}$), um eine potenzielle Einspeisung von Spionagephotonen vor dem zweiten Teilnehmer ($C_j$) zu detektieren.

**2.** Verfahren nach dem vorstehenden Anspruch, wobei bei jeder Wiederholung von q=1 bis Q der Schrittabfolge:

- die erste vom Sender (C1) durchgeführte Aktion die folgenden Schritte umfasst:

  ◦ Wählen eines Werts sq gleich 0 oder 1
  o Wählen eines Werts I zwischen 0 und d-1
  o Anwenden einer Transformation $P^{sq}X_l$ auf ein vom Sender am Anfang der Kommunikationskette erzeugtes Referenzphoton

- die zweite vom ersten Teilnehmer (Ci) durchgeführte Aktion die folgenden Schritte umfasst:

  ◦ Wählen eines Werts m zwischen 0 und d-1
  o Anwenden einer Transformation Xm auf das über die Kommunikationskette empfangene Photon,

- die dritte vom zweiten Teilnehmer (Cj) durchgeführte Aktion die folgenden Schritte umfasst:

  ◦ Wählen eines Werts n zwischen 0 und d-1
  o Anwenden einer Transformation Xn auf das über die Kommunikationskette empfangene Photon,

- die vierte vom Empfänger ($C_N$) durchgeführte Aktion die folgenden Schritte umfasst:

  ◦ Wählen eines Werts tq gleich 0 oder 1
  o Anwenden einer Transformation $P^{(-1)tq}$ auf das über die Kommunikationskette empfangene Photon, wobei:

    die Notation $P^1$ bedeutet, dass die Transformation P erfolgt,
    die Notation $P^0$ bedeutet, dass die Transformation P nicht erfolgt,
    die Notation $P^{(-1)1}$ bedeutet, dass die Transformation $P^{(-1)}$ erfolgt,
    die Notation $P^{(-1)0}$ bedeutet, dass die Transformation $P^{(-1)}$ nicht erfolgt,
    die Notation $X_m$ eine Transformation bezeichnet, die es ermöglicht, vom Basisquantenzustand |t>, wobei t eine ganze Zahl zwischen 0 und d-1 ist, in den orthogonalen Zustand cl(t+m) mod d> in der Basis $B_0$ überzugehen, oder die Transformation bezeichnet, die es ermöglicht, von einem Zustand $|e_t>$ zu $d|e_t+m$ mod d> in der Basis $B_1$ überzugehen, wobei m eine ganze Zahl zwischen 0 und d-1 ist und c und d globale Phasen sind, die durch diese Transformationen induziert werden.

**3.** Verfahren zur sicheren Übertragung nach Anspruch 1, wobei bei jeder Wiederholung von q=1 bis Q der Schrittabfolge:

- die erste Aktion die Bereitstellung eines Photons in einem Referenzbasisquantenzustand |0> einer orthonormalisierten Kodierbasis $B_0$, die als Standardbasis der Dimension d bezeichnet wird, durch den Sender (C1) umfasst,
- die zweite vom ersten Teilnehmer ($C_i$) durchgeführte Aktion die folgenden Schritte umfasst:

  ◦ Wählen eines Werts sq gleich 0 oder 1
  ◦ Wählen eines Werts m zwischen 0 und d-1
  ◦ Anwenden einer Transformation $P^{sq}X_m$ auf das über die Kommunikationskette empfangene Photon oder, falls i gleich 1 ist, auf das Photon am Anfang der Kommunikationskette,

- die dritte vom zweiten Teilnehmer ($C_j$) durchgeführte Aktion die folgenden Schritte umfasst:

  ◦ Wählen eines Werts tq gleich 0 oder 1
  ◦ Wählen eines Werts n zwischen 0 und d-1
  ◦ Anwenden einer Transformation $X_nP^{(-1)tq}$ auf das über die Kommunikationskette empfangene Photon, wobei:

    - die Notation $P^1$ bedeutet, dass die Transformation P erfolgt,
    - die Notation $P^0$ bedeutet, dass die Transformation P nicht erfolgt,
    - die Notation $P^{(-1)1}$ bedeutet, dass die Transformation $P^{(-1)}$ erfolgt,
    - die Notation $P^{(-1)0}$ bedeutet, dass die Transformation P nicht erfolgt,
    - die Notation $X_m$ eine Transformation bezeichnet, die es ermöglicht, vom Basisquantenzustand |t>, wobei t eine ganze Zahl zwischen 0 und d-1 ist, in den orthogonalen Zustand |(t+m) mod d> in der Basis $B_0$ überzugehen, oder die Transformation, die es einem ermöglicht, von einem Zustand $|e_t>$ zu $|e_{t+m \bmod d}>$ in der Basis $B_1$ überzugehen, wobei m eine ganze Zahl zwischen 0 und d-1 ist.

**4.** Verfahren zur sicheren Übertragung nach einem der Ansprüche 1 bis 3, wobei die Dimension d gleich 2 ist.

**5.** Verfahren nach einem der vorstehenden Ansprüche, wobei das Photon durch einen Frequenzfilter und ein Zeittor übertragen wird.

**6.** Verfahren zur sicheren Übertragung, nach einem der Ansprüche 1 bis 5, wobei jeder Quantenzustand $q_q$ in einem Freiheitsgrad des Photons kodiert wird, der aus der Phase, der Phasendifferenz, dem Aufenthaltsort zu einem Zeitpunkt, der Polarisation oder der Frequenz des Photons ausgewählt wird.

**7.** Verfahren zur sicheren Übertragung nach einem der Ansprüche 1 bis 6, wobei die Folge von Q Quantenzuständen $q_q$ zufällig ausgewählt wird, um einen Quantenschlüssel festzulegen.

**8.** Vorrichtung zur Umsetzung des Verfahrens zur sicheren Übertragung nach einem der Ansprüche 1 bis 5 oder Anspruch 7, umfassend:

- einen Laser, der geeignet ist, Photonen zu erzeugen, und einen initialen Modulator, der geeignet ist, einen Freiheitsgrad eines erzeugten Photons zu modulieren,
- N-2 Zwischenmodulatoren, die geeignet sind, einen Freiheitsgrad eines empfangenen Photons zu modulieren,
- einen Photonendetektor, der geeignet ist, einzelne Photonen zu detektieren, und einen finalen Modulator, der geeignet ist, einen Freiheitsgrad eines empfangenen Photons zu modulieren, wobei:
- der Laser und der initiale Modulator dem Sender ($C_1$) zugeordnet sind und geeignet sind, vom Sender ($C_1$) gesteuert zu werden,
- jeder der N-2 Zwischenmodulatoren einem Zwischenteilnehmer ($C_k$) aus den N-2 Zwischenteilnehmern ($C_2$) bis ($C_{N-1}$), bei denen es sich nicht um Sender ($C_1$) und den Empfänger ($C_N$) handelt, zugeordnet ist und geeignet ist, von dem Zwischenteilnehmer ($C_k$) gesteuert zu werden,
- der Photonendetektor und der finale Modulator dem Empfänger ($C_N$) zugeordnet sind und geeignet sind, vom Empfänger ($C_N$) gesteuert zu werden, und ferner umfassend:

in dem Fall, dass es sich bei sowohl dem ersten Teilnehmer ($C_i$) als auch dem zweiten Teilnehmer ($C_j$) nicht um den Sender ($C_1$) und den Empfänger ($C_N$) handelt:

- einen ersten vor dem dem ersten Teilnehmer ($C_i$) zugeordneten Modulator positionierten Strahlteiler ($S_i$),
- eine erste dem ersten Teilnehmer ($C_i$) zugeordnete Fotodiode ($PD_i$), die geeignet ist, die Lichtleistung eines Photonenflusses zu messen,
- einen zweiten vor dem dem zweiten Teilnehmer ($C_j$) zugeordneten Modulator positionierten Strahlteiler ($S_i$),
- eine zweite dem zweiten Teilnehmer (Cj) zugeordnete Fotodiode ($PD_j$), die geeignet ist, die Lichtleistung eines Photonenflusses zu messen, wobei:
- der erste Strahlteiler ($S_i$) geeignet ist, einen von dem Teilnehmer unmittelbar vor dem ersten Teilnehmer in der Kommunikationskette ($C_{i-1}$) empfangen Photonenstrom in zwei verschiedene Richtungen zu trennen, die eine in Richtung des Modulators des ersten Teilnehmers ($C_i$), dann zum Rest der Kommunikationskette, die andere zur ersten Fotodiode ($PD_i$),
- der zweite Strahlteiler ($S_i$) geeignet ist, einen von dem Teilnehmer unmittelbar vor dem zweiten Teilnehmer in der Kommunikationskette ($C_{j-i}$) empfangen Photonenstrom in zwei verschiedene Richtungen zu trennen, die eine in Richtung des Modulators des zweiten Teilnehmers ($C_i$), dann zum Rest der Kommunikationskette, die andere zur zweiten Fotodiode ($PD_j$), um das Verfahren zur sicheren Übertragung nach dem Anspruch 1 umzusetzen.

**9.** Vorrichtung zur Umsetzung eines Verfahrens zur sicheren Übertragung nach Anspruch 8, wobei:

- der Freiheitsgrad des gewählten Photons die Phase ist
- der initiale Modulator, die Zwischenmodulatoren und der finale Modulator Phasenmodulatoren sind.

**10.** Vorrichtung zur Umsetzung des Verfahrens zur sicheren Übertragung nach Anspruch 8, wobei:

- der Freiheitsgrad des gewählten Photons die Polarisation ist
- der initiale Modulator, die Zwischenmodulatoren und der finale Modulator Polarisationsmodulatoren sind.

**11.** Vorrichtung zur Umsetzung eines Verfahrens zur sicheren Übertragung nach Anspruch 8, wobei:

- der Freiheitsgrad des gewählten Photons der Aufenthaltsort zu einem Zeitpunkt ist
- der initiale Modulator, die Zwischenmodulatoren und der finale Modulator jeweils eine Anzahl von Verzögerungsleitungen, die der Dimension der Kodierbasis der Quantenbits entspricht, und eine Anzahl von Trennmessern, die der doppelten Anzahl von Verzögerungsleitungen entspricht, umfassen.

## Claims

**1.** A method for secure transmission of a sequence of Q quantum states $q_q$ encoded in the form of a sequence of Q photons, q being an integer between 1 and Q, between a first participant ($C_i$) and a second participant ($C_j$), chosen from a plurality of N distinct participants ($C_1$), ....($C_i$), ...($C_j$), ...($C_N$) of a single quantum communication channel forming a communication chain between a transmitter ($C_1$) and a receiver ($C_N$), where N is an integer greater than or equal to 3, wherein the first participant ($C_i$) is located upstream of the second participant ($C_j$) in the communication chain,

said method comprising, in order:

- the following sequence of steps, repeated from q=1 to Q:

◦ a first action performed by the transmitter (C1) comprising the preparation by the transmitter (C1) of a photon in a starting quantum state |u> of an orthonormal encoding base Ba of dimension d and base states |e0>, |e1>,... |ed-1 >, with a chosen at random between 0 and 1,
◦ transmitting the prepared photon in the communication chain,
◦ a second action performed by the first participant ($C_i$) on said photon, of deciding whether or not to transform the quantum state of the transmitted photon into an orthogonal base quantum state in the encoding base $B_0$ and in the encoding base $B_1$
◦ a third action performed by the second participant ($C_j$) on said photon, of deciding whether or not to transform the quantum state of the photon received from the immediately preceding participant ($C_{j-1}$) into a corresponding orthogonal quantum state in the encoding base $B_0$ and in the encoding base $B_1$
◦ a fourth action performed by the receiver ($C_N$) comprising the measurement, in the standard base $B_0$

or in the base $B_1$, of the final $|alpha_{final}>$ state of the photon transmitted in the communication chain,
◦ exchanging over a conventional communication channel between at least some of the participants, of at least some of the decisions among those of the starting base a, the starting state $|u>$, the measurement base chosen by said receiver ($C_N$) and the result of the measurement of $|alpha_{final}>$ in this measurement base, in order to enable each of said first and second participants to obtain information from said transmitter, from said receiver and from the other of said first and second participants,
◦ obtaining, between the first and second participants ($C_i$) and ($C_j$), a description of the transmitted quantum state $q_q$ corresponding to one of the base states $|e_0>$, $|e_1>$,... $|e_{d-1}>$, thanks to said part of the decisions and said measurement result;

- then, reconstituting, by the first and second participants ($C_i$) and ($C_j$), by concatenation, of a sequence of descriptions of the Q transmitted quantum states $q_q$, for q ranging from 1 to Q, and

wherein i is different from 1 and N, and j is different from 1 and N, the sequence of Q photons encoding the sequence of Q quantum states $q_q$ has a given light power $P_{seq}$ and N is an integer greater than or equal to 4, and wherein:

- Said second action includes:

◦ a step ($G_5$) of sampling a first portion $P(_{seq1})$ of the light power ($P_{seq}$) of the photon stream received from the participant ($C_{i-1}$) immediately preceding the first participant ($C_i$),
◦ a step ($G_6$) of comparing the first portion $P(_{seq1})$ with a second portion ($P_{seq1'}$) of the light power ($P_{seq}$) of the photon stream sent by the transmitter ($C_1$) in order to detect a potential injection of spy photons before the first participant ($C_i$),

- said third action includes:

◦ a step ($G_7$) of sampling a third portion ($P_{seq2}$) of the light power of the photon stream received from the participant ($C_{j-i}$) immediately preceding the second participant ($C_j$),
◦ a step ($G_8$) of comparing the third portion ($P_{seq2}$) with a fourth portion ($P_{seq2'}$) of the difference between the light power of the photon stream sent by the transmitter ($P_{seq}$) and the first portion ($P_{seq1}$) in order to detect a potential injection of spy photons before the second participant ($C_j$).

**2.** The method according to the preceding claim, wherein, for each repetition from q=1 to Q of the succession of steps:

- The first action, performed by the transmitter (C1), comprises the following steps:

◦ Choosing a value sq equal to 0 or 1
◦ Choosing a value l between 0 and d-1
◦ Applying a $P^{sq}X_l$ transformation to a reference photon created by the transmitter at the start of the communication chain

- the second action, carried out by the first participant (Ci), comprises the following steps:

◦ Choosing a value m between 0 and d-1
◦ Applying an Xm transformation to the photon received through the communication chain,

- the third action, carried out by the second participant (Cj), comprises the following steps:

◦ Choosing a value n between 0 and d-1
◦ Applying a transformation Xn to the photon received through the communication chain,

- the fourth action, carried out by the receiver ($C_N$), comprises the following steps:

◦ Choosing a value tq equal to 0 or 1
◦ Applying a transformation $P^{(-1)tq}$ to the photon received through the communication chain, wherein:

the notation $P^1$ means that the transformation P takes place,
the notation P° means that the transformation P does not take place,
the notation $P^{(-1)1}$ means that the transformation $P^{(-1)}$ takes place,
the notation $P^{(-1)0}$ means that the transformation $P^{(-1)}$ does not take place,
the notation $X_m$ designates a transformation from the basic quantum state |t>, t being an integer between 0 and d-1, to the orthogonal state cl(t+m) mod d> in the base $B_0$, or the transformation from a $|e_t>$ state to $d|e_t$+m mod d> in the base $B_1$, for m an integer between 0 and d-1, and c and d global phases induced by these transformations.

**3.** The secure transmission method according to claim 1, wherein, for each repetition from q=1 to Q of the succession of steps:

- the first action comprises the preparation by the transmitter (C1) of a photon in a reference base quantum state |0> of an orthonormal encoding base $B_0$, called the d-dimensional standard base,
- the second action carried out by the first participant ($C_i$) comprises the following steps:

  ◦ Choosing a value sq equal to 0 or 1
  ◦ Choosing a value m between 0 and d-1
  ◦ Applying a $P^{sq}X_m$ transformation to the photon received through the communication chain, or in the case where i is equal to 1, to the photon at the start of the communication chain,

- the third action, carried out by the second participant ($C_j$), comprises the following steps:

  ◦ Choosing a value tq equal to 0 or 1
  ◦ Choosing a value n between 0 and d-1
  ◦ Applying an $X_nP^{(-1)tq}$ transformation to the photon received through the communication chain, wherein:

    - the notation $P^1$ means that the transformation P takes place,
    - the notation P° means that the transformation P does not take place,
    - the notation $P^{(-1)1}$ means that the transformation $P^{(-1)}$ takes place,
    - the notation $P^{(-1)0}$ means that the transformation $P^{(-1)}$ does not take place,
    - the notation $X_m$ designates a transformation from the base quantum state |t>, t being an integer between 0 and d-1, in the orthogonal state |(t+m) mod d> in the base $B_0$, or the transformation from a state $|e_t>$ to $|e_t+_{m \bmod d}>$ in the base $B_1$, for m an integer between 0 and d-1.

**4.** The secure transmission method according to one of claims 1 to 3, wherein said dimension d is equal to 2.

**5.** The method according to one of the preceding claims, wherein said photon is transmitted through a frequency filter and a time gate.

**6.** The secure transmission method according to one of claims 1 to 5, wherein each quantum state $q_q$ is encoded in a degree of freedom of the photon chosen from phase, phase difference, temporal localization, polarization or photon frequency.

**7.** The secure transmission method according to one of claims 1 to 6, wherein the sequence of Q quantum states $q_q$ is randomly selected for the purpose of establishing a quantum key.

**8.** A device for implementing the secure transmission method according to one of claims 1 to 5, or 7, comprising:

- a laser capable of generating photons and an initial modulator capable of modulating a degree of freedom of a generated photon,
- N-2 intermediate modulators capable of modulating a degree of freedom of a received photon,
- a photon detector capable of detecting single photons and a final modulator capable of modulating a degree of freedom of a received photon, wherein:
- the laser and the initial modulator are associated with the transmitter ($C_1$) and are able to be controlled by the transmitter ($C_1$),
- each of the N-2 intermediate modulators is associated with an intermediate participant ($C_k$) among the N-2

intermediate participants ($C_2$) to ($C_{N-1}$) distinct from the transmitter ($C_1$) and receiver ($C_N$) and is controllable by said intermediate participant ($C_k$),
- the photon detector and the final modulator are associated with the receiver ($C_N$) and are controllable by the receiver ($C_N$), and further comprising,

in the case where the first participant ($C_i$) and the second participant ($C_j$) are both two distinct transmitters ($C_1$) and receivers ($C_N$):

- a first beam splitter ($S_i$) positioned upstream of the modulator associated with the first participant ($C_i$),
- a first photodiode ($PD_i$) associated with the first participant ($C_i$) and able to measure the luminous power of a photon stream,
- a second beam splitter ($S_j$) positioned upstream of the modulator associated with the second participant ($C_j$),
- a second photodiode ($PD_j$) associated with the second participant ($C_j$) and suitable for measuring a luminous power of a photon stream, wherein:
- the first beam splitter ($S_i$) is able to split a photon stream received from the participant immediately preceding the first participant in the communication chain ($C_{i-1}$) in two distinct directions, one towards the modulator of the first participant ($C_i$) and then towards the rest of the communication chain, and the other towards the first photodiode ($PD_i$),
- the second beam splitter ($S_j$) is capable of splitting a photon stream received from the participant immediately preceding the second participant in the communication chain ($C_{j-1}$) in two distinct directions, one towards the modulator of the second participant ($C_j$) and then towards the rest of the communication chain, and the other towards the second photodiode ($PD_j$), in order to implement the secure transmission method according to claim 1.

**9.** The device for implementing a secure transmission method according to claim 8, wherein:

- The degree of freedom of the chosen photon is the phase
- The initial modulator, intermediate modulators and final modulator are phase modulators.

**10.** The device for implementing the secure transmission method according to claim 8, wherein:

- The degree of freedom of the chosen photon is polarization
- The initial modulator, intermediate modulators and final modulator are polarization modulators.

**11.** The device for implementing the secure transmission method according to claim 8, wherein:

- The degree of freedom of the chosen photon is the temporal localization
- The initial modulator, the intermediate modulators and the final modulator each comprise a number of delay lines equal to the size of the quantum bit encoding base and a number of splitter blades equal to twice the number of delay lines.

[Fig. 1]

| Degré de liberté | \|0> | \|1> | Bases incompatibles |
|---|---|---|---|
| Phase | Phase fixe $P_0$ | $P_0$+pi | Phase décalée de pi/2 |
| Différence de phase | 0 | Pi | Phase décalée de pi/2 |
| Localisation temporelle | Temps $t_0$ | $t_0$+delta | Base de Hadamard |
| Polarisation | Horizontale | Verticale | Base diagonale |
| Fréquence | $f_1$ | $f_2$ | Base de Hadamard |

La base HV (à gauche) et la base diagonale (à droite) pour la polarisation

[Fig. 2]

C1 Emetteur
Ci
Cj
CN Récepteur
chaîne de communication quantique
Echange des décisions prises en G2 et G3
Mesure de l'état |alpha_final>
canal de communication classique
Décisions prises en G2 et G3 identiques
Décisions prises en G2 et G3 différentes
Obtention par Cj de l'état transmis par Ci
Résultat de la mesure par CN rejeté

[Fig. 3]

$P^{S_q} X_m |0\rangle$
d=2

| $S_q$ | m | état |
|---|---|---|
| 0 | 0 | \|0> |
| 0 | 1 | \|1> |
| 1 | 0 | \|+> |
| 1 | 1 | \|-> |

[Fig. 4]

Ci
ESPION

Injection de lumière par l'espion

[Fig. 5]

Ci
Photodiode

Contre mesure: Ci prélève des photons pour mesurer l'intensité lumineuse moyenne

[Fig. 6]

C1
Emetteur
Laser
Modulateur
C2
Transformateur
Modulateur
C3
Transformateur
Modulateur
C4
Récepteur
SPD
Modulateur

[Fig. 7]

Ligne à retard

[Fig. 8]

t
|t0>
|t1>
|t2>
|t3>
0 0 0 0
|τ0>
0 π/2 π 3π/2
|τ1>
0 π 2π 3π
|τ2>
0 3π/2 3π 9π/2
|τ3>

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5764765 A


### Littérature non-brevet citée dans la description


- **A. R. DIXON et al.** Quantum key distribution with hacking countermeasures and long term field trial. *SCIENTIFIC REPORTS,* 16 Mai 2017, vol. 7 (1
- **ISLAM et al.** Provably secure and high-rate quantum key distribution with time-bin qubits. *Sci. Adv.,* 2017, vol. 3